(19)

Europäisches
Patentamt
European
Patent Office
Office européen
des brevets

(11)     **EP 2 447 219 A1**

(12)     **EUROPEAN PATENT APPLICATION**

(43) Date of publication:
02.05.2012   Bulletin 2012/18

(51) Int Cl.:
*C02F 1/52* (2006.01)       *C02F 1/66* (2006.01)
*C02F 101/20* (2006.01)     *C02F 101/22* (2006.01)
*C02F 103/16* (2006.01)

(21) Application number: 10189163.8

(22) Date of filing: 28.10.2010

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Recoval Belgium
6240 Farciennes (BE)

(72) Inventors:
• Nguyen, Evelyne
  1390 Grez-Doiceau (BE)
• Van Mechelen, Dirk
  2830 Tisselt (BE)

(74) Representative: Van Reet, Joseph et al
Gevers
Intellectual Property House
Holidaystraat 5
1831 Diegem (BE)

(54)     **Method for purifying waste water from a stainless steel slag treatment process**

(57)     The present invention relates to a method for purifying highly alkaline waste water from a stainless steel slag treatment process. This waste water contains between 0.5 and 5 mg/l of trivalent chromium (Cr(III)) and between 0.5 and 10 mg/l of molybdenum. To reduce the chromium and molybdenum content a trivalent iron is added to the waste water in the form of a water soluble ferric salt and the trivalent iron is allowed to co-precipitate with said chromium and molybdenum by lowering the pH of the waste water. It was found that by performing the co-precipitation at a pH of 3.5 to 5.7, both the chromium and the molybdenum content could be effectively reduced to a level of less than 0.5 mg/l, and this without having to provide large amounts of trivalent iron in the waste water, without having to repeat the purification process for several times, without having to add sulphide to the waste water, and without having to lower and raise the pH of the waste water for more than one time.

EP 2 447 219 A1

## Description

The present invention relates to a method for purifying waste water from a stainless steel slag treatment process wherein stainless steel slag is brought into contact with water, in particular to neutralize the free lime contained therein, thereby producing said waste water. The thus obtained waste water has an initial pH higher than 10, in particular higher than 11 and more particularly higher than 11.5. It contains chromium, including between 0.5 and 5 mg/l of trivalent chromium (Cr(III)), and further between 0.5 and 10 mg/l of molybdenum. Usually it also contains between 200 and 2500 mg/l of chloride. During the purification process, the chromium and usually also the molybdenum content has to be reduced in order to be able to discharge the purified waste water. To reduce the chromium and molybdenum contents a trivalent metal cation is added to the waste water and is allowed to co-precipitate with said chromium and molybdenum by lowering the pH of the waste water to form a precipitate which is at least partially removed from the waste water.

Stainless steel is made from iron and contains further chromium and, depending on the type of stainless steel, also nickel and often molybdenum. During the production of stainless steel, a slag is generated which comprises mainly calcium silicates and additionally also heavy metals such as chromium, nickel and molybdenum. The slag further comprises stainless steel particles in different sizes and a small amount of free lime.

After being separated from the molten stainless steel, the liquid stainless steel slag is poured into large pits where it is allowed to cool down, partially by spraying water onto the hot steel slag. In order to reclaim the valuable stainless steel particles which are contained in the slag, the solidified slag is crushed or even ground into smaller particles from which the stainless steel particles can be removed. This can be done by hand picking, magnetic separation techniques, etc. As disclosed in EP 1 312 415 a wet jigging process can also be used to separate crushed slag particles which have a relatively high stainless steel content from those particles which contain less stainless steel particles. This separation process is carried out in a water bath and is based on a difference in the density of the slag particles.

Depending on their size, the stainless steel slag particles can be re-used as coarse or fine aggregates in the production of concrete or asphalt (bituminous concrete). After a fine milling, the finest particles can also be used as filler in asphalt (=bituminous concrete) or in concrete. A problem with slag aggregates is that they still contain free lime inclusions which may start to swell and thus cause cracks in the asphalt or concrete. As disclosed in EP 1 146 022 this problem can be solved by bringing the crushed stainless steel slag particles in contact with water so as to neutralize the free lime present therein. This can be done by submerging the stainless steel slag particles in water but it is preferably done by spraying water over the stainless steel slag. The neutralization water is collected and is re-used. In view of the large area required for this free lime neutralization process, the stainless steel slag aggregates are treated outdoors. As a result thereof, in rainy periods, more water is collected which needs to be stored or even discharged. A problem in this respect is that by the repeated contact with the stainless steel slag the pH of this process water has raised to a pH value of 11 or even higher (usually higher than 11.5 or even higher than 12) so that a treatment with acid is required to meet the discharge standards (in Belgium the discharge standard for the pH of waste water is that this pH must be within the range of from 6.5 to 9). Moreover, the process water contains heavy metals, in particular chromium and molybdenum, the content of which often exceeds the discharge standards. In Belgium the general discharge standard for chromium (total chromium, i.e. Cr(III) and Cr(VI)) is 0.05 mg/l but for the steel industry this discharge standard has been raised to 0.5 mg/l. The discharge standard for molybdenum has been raised for the steel industry in Belgium to 4 mg/l. Other countries will have similar discharge standards. There are also discharge standards, either general standards or specific standards provided in the individual operation authorisations, for less harmful anions, such as chlorides and sulphates, which contribute to the salt load of the waste water. These anions may be present as such in the waste water or may have been added thereto when lowering the pH of the highly alkaline waste water by means of acids such as hydrochloric acid and sulphuric acid.

US 7 390 416 discloses a method for removing heavy metals including chromium and molybdenum from waste waters which can have a pH in the range of 6 to 12, but which typically have a pH in the range of 8 to 10. In a first step aluminium sulphate (alum) is added in a concentration of approximately 0.15 to 1.0 % so that between 8.8 and 58.5 mmoles/l of trivalent aluminium ions are provided in the waste water and so that the pH of the waste water is reduced to a pH of about 3.5 to 6. Subsequently, the pH is raised again by the addition of a hydroxyl providing basic solution to a pH value of between 8 and 10 and an iron sulphide complex is added. At such high pH values, different metal sulphides precipitate. In a third step, the pH of the waste water is lowered again to about 3.2 to 3.7 by the addition of an acid such as phosphoric, sulphuric or nitric acid and a flocculating agent is added to the waste water in a sufficient amount to precipitate the metals. The precipitate sludge is allowed to settle and is separated from the supernatant. The pH of the supernatant is then raised again by means of a hydroxyl providing basic solution so that it can be discharged.

By this method quite high heavy metal removal efficiencies can be achieved. A drawback is however that when the waste water is quite alkaline, a relatively large amount of acids and bases needs to be added for the successive pH raising and lowering steps resulting in a considerable increase in the salt load of the waste water (which may be above certain discharge standards, in particular as to the chloride and sulphate content of the waste water). Moreover, quite a large amount of sludge is generated by the relatively large amount of aluminium sulphate. The process is furthermore quite expensive as a result of the large amount of aluminium sulphate which has to be used and as a result of the use of additives such as the acids and bases and especially also the required sulphide compounds. The purification process is also quite complex and thus requires a costly installation.

A purification method wherein less pH adjustment steps are used and which requires no sulphide is disclosed in JP 2000-117265. This Japanese patent application only describes the removal efficiencies of molybdenum which can be achieved by means of trivalent iron chloride ($FeCl_3$). In the comparative test results, only a 50% removal of molybdenum could be achieved at a pH of 7 by co-precipitation with 100 mg/l $FeCl_3$. To increase this removal efficiency, $FeCl_3$ was first made to precipitate at a pH of 7 and the obtained sludge ($Fe(OH)_3$) was added to the waste water to achieve a suspended solids content of more than 1000 mg/l, preferably of more than 3000 mg/l (which corresponds to more than 9.3, preferably more than 28 mmol/l of trivalent iron atoms in the waste water) so that the molybdenum can be adsorbed on this $Fe(OH)_3$. The molybdenum contained in the waste water is then co-precipitated with trivalent iron, and adsorbed onto the $Fe(OH)_3$ suspended solids, by adding per mg/l molybdenum contained in the waste water between 0.5 and 1 mg/l ferric ions, in the form of $FeCl_3$, to the waste water and by adjusting the pH thereof to a pH between 4 and 8. In the examples, about 0.4 mmoles/l of trivalent iron ions were added in the form of $FeCl_3$ and the pH was adjusted to pH 5 or 7. In order to be able to achieve a high removal efficiency, or in order to be able to reduce the molybdenum content to a concentration of less than 0.7 mg/l, this process was to be repeated three times.

A drawback of this purification process is therefore that quite a lot of trivalent iron sludge has to be added and removed again from the waste water and that, notwithstanding the presence of a large amount of trivalent iron in the waste water, the molybdenum removal is quite small so that the process has to be repeated three times. Moreover, this Japanese patent application doesn't teach anything about the removal efficiency of trivalent chromium when the waste water would also contain chromium.

An object of the present invention is therefore to provide a new method which enables to remove both trivalent chromium and molybdenum with a sufficiently high removal efficiency from highly alkaline waste water without having to provide large amounts of trivalent iron in the waste water, without having to repeat the purification process for several times, without having to add sulphide to the waste water, and without having to lower and raise the pH of the waste water for more than one time.

To this end the method according to the present invention is characterised in that said trivalent metal cation is trivalent iron which is added in the form of at least one water soluble ferric salt to the waste water so as to provide between 1 and 5 mmoles/l of trivalent iron atoms in said waste water and in that the method comprises the successive steps of:

- lowering the pH of the waste water from said initial pH to a lowered pH value within a range of from 3.5 to 5.7 by adding said at least one ferric salt and at least one acid to said waste water, a first pH reduction being obtained by the addition of said at least one ferric salt and a second pH reduction by the addition of said at least one acid, the sum of the first and the second pH reductions being equal to or differing by less than one pH unit from the difference between said initial pH and said lowered pH value;
- allowing said precipitate to be formed within said pH range;
- removing said precipitate at least partially from the waste water thereby lowering the chromium content of the waste water to a concentration of less than 0.5 mg/l and the molybdenum content, when the initial molybdenum content was higher than or equal to 4 mg/l, to a concentration of less than 4 mg/l;
- adding an alkaline substance to the waste water to increase the pH thereof to a value of between 6.5 and 9; and
- discharging the purified waste water.

An important advantage of this purification method is that both the molybdenum and the chromium content of the waste water resulting from the treatment of stainless steel slags can be considerably reduced by a co-precipitation of trivalent iron (in particular to a concentration of less than 0.5 mg/l) by only one pH lowering step and without the use of sulphides. It has indeed been found that, with this specific highly alkaline waste water, the optimal removal efficiency is situated within the pH range of 3.5 to 5.7 and this not only for molybdenum but surprisingly also for the trivalent chromium. This is quite surprising since most prior art documents disclose a higher pH range for the removal of chromium by co-precipitation with trivalent iron. Reference can be made for example to the review paper of Robert W. Peters and Linda Shem: "Separation of heavy metals: removal from industrial waste water and contaminated soil" mentioning more particularly that ferric sulphate coagulation achieved excellent $Cr^{3+}$ removals, in excess of 98%, throughout the pH range of 6.5 to 9.3.

Notwithstanding the high initial pH of the waste water, the additional salt load due to the required lowering and raising of the pH can be kept low due to the fact that the pH is lowered only once and is raised again also only once. Moreover, only a limited amount of the soluble ferric salt has to be added thus also reducing the salt load and moreover the amount of sludge which is generated by the purification process. Keeping the additional salt load low is important in view of the discharge standards, especially since the waste water contains already a quite large amount of chlorides and to a smaller extent of sulphates.

In an advantageous embodiment of the method according to the present invention the acid used to lower the pH of the waste water comprises gaseous carbon dioxide which is contained in a gas which comprises preferably at least 5 wt. %, more preferably at least 10 wt. %, of carbon dioxide.

Due to the high pH of the waste water, this gaseous carbon dioxide reacts quickly with the waste water so that the carbon dioxide can efficiently be captured by the waste water out of the gas wherein it is contained. This gas may for example be a flue gas generated by a power plant or it may also be a waste gas produced by a cement kiln wherein cement clinker is made with the use of carbonates. The process according to the invention can thus assist in reducing the greenhouse gas emissions.

In a preferred embodiment of the method according to the present invention the lowered pH at which the precipitate is formed is higher than 3.6, and preferably higher than 3.7, but lower than 5.3 and preferably lower than 4.8.

It has been found that within this preferred pH range, optimal chromium and molybdenum removal efficiencies are obtained enabling to reduce the molybdenum content to a concentration of less than 0.2 mg/l and the chromium content to a concentration of less than 0.3 mg/l.

In a further preferred embodiment of the method according to the present invention the alkaline substance which is used to raise the pH of the purified water to a pH value of between 6.5 and 9 before discharging the purified water comprises non-purified waste water, which is added in such an amount that the chromium content of the mixture of purified and non-purified waste water remain less than 0.5 mg/l and the molybdenum content of this mixture remains less than 4 mg/l.

The addition of non-purified waste water is possible by the sufficiently low chromium and molybdenum content of the purified waste water. This embodiment has the advantage that the salt load of the mixture is reduced.

In another preferred embodiment of the method according to the present invention the alkaline substance which is used to raise the pH of the purified water to a pH value of between 6.5 and 9 before discharging the purified water comprises lime, in particular milk of lime.

Lime does not add undesired anions to the waste water. Moreover, the calcium ions added to the waste water may precipitate with the sulphate ions contained in the waste water (originating in particular from the trivalent iron salt ($Fe_2(SO_4)_3$) and/or from the acid ($H_2SO_4$) used to lower the pH of the waste water) so that they can be used to lower the sulphate content of the waste water.

Other particularities and advantages of the invention will become apparent from the following description of some particular embodiments of the method according to the present invention. In this description reference is made to the drawings wherein:

Figure 1 is a titration curve of a 50 ml sample of waste water from a stainless steel slag treatment/neutralization process titrated with 1 M sulphuric acid.

Figure 2 is a graph showing the total Cr concentration in the waste water and the dissolved Cr concentration (after filtration over a 0.45 $\mu$m filter) as a function of pH.

Figure 3 is a graph showing the total Mo concentration in the waste water and the dissolved Mo concentration (after filtration over a 0.45 $\mu$m filter) as a function of pH.

Figure 4 is a graph showing the pH reduction (final pH) as a result of the addition of 100 mg $Fe^{3+}$/l (in the form of $Fe_2(SO_4)_3$) for different pH's obtained by the addition of sulphuric acid.

Figure 5 is a graph showing the concentration of Mo after co-precipitation with iron (III) hydroxide and filtration over a 0.45 $\mu$m filter as a function of the final pH obtained by first adding $H_2SO_4$ and then $Fe_2(SO_4)_3$.

Figure 6 is a graph showing the concentration of Cr after co-precipitation with iron (III) hydroxide and filtration over a 0.45 $\mu$m filter as a function of the final pH obtained by first adding $H_2SO_4$ and then $Fe_2(SO_4)_3$.

Figures 7 and 8 are respectively analogous to Figures 5 and 6 but the $Fe_2(SO_4)_3$ has been added before the $H_2SO_4$ instead of thereafter.

Figure 9 is a graph showing the concentration of Cr in the supernatant after co-precipitation with iron (III) hydroxide at a final pH of 3.77 as a function of settling time.

Figure 10 is a graph showing the concentration of Mo in the supernatant after co-precipitation with iron (III) hydroxide at a final pH of 3.77 as a function of settling time.

The present invention generally relates to a new method for purifying waste water generated during the processing of stainless steel slag. Stainless steel contains mainly iron and further at least chromium and optionally other heavy metals such as nickel and molybdenum. During the production of stainless steel, calcium and magnesium oxides/carbonates (f.e. burned lime, calcite, dolomite and magnesite) are added to the furnace (in particular an electric arc furnace) to produce a liquid slag on top of the molten metal. This slag acts as a destination for oxidised impurities. After the steel making process, the slag is poured into pits and is allowed to cool down. To accelerate the cooling process, water is sprayed onto the hot slag. During the cooling process, different amorphous and crystalline phases are formed, including calcium silicates.

The solidified pieces of stainless steel slag are crushed to produce fine or coarse aggregates which can be used in particular for producing concrete or asphalt (= bituminous concrete) (see EP 0 837 043 which is incorporated herein by reference). As disclosed in EP 2 160 367 the crushed stainless steel slag particles can also be further grinded or milled to a very small particle size, in particular to a particle size smaller than 63 $\mu$m so that the grinded stainless steel slag particles can be used as a filler in concrete (in particular self-compacting concrete) or in asphalt. Crushing/grinding of the stainless steel slag enables to recover as much as possible of the valuable stainless steel which is contained in stainless steel slag. This can be done by hand picking, magnetic separation techniques or density separation techniques. A preferred density separation technique is the wet jigging technique which is disclosed in EP 1 312 415. This European patent application is also incorporated herein by reference. In this wet jigging technique, the stainless steel slag particles are made to float in water so that they can be separated based on their density.

Fresh stainless steel slag always still contains some free lime (i.e. CaO). This free lime may be present in the form of small or larger inclusions in the stainless steel slag particles. When used as aggregate for concrete or asphalt, it is important that this free lime is neutralized since when the free lime inclusions come into contact with water, they may start to swell thus causing cracks in the concrete or asphalt. To solve this problem, the crushed/grinded stainless steel slag particles are brought in contact with water to neutralize the free lime contained therein. As disclosed in EP 1 146 022, which is incorporated herein by reference, this can be done by immersing the stainless steel slag particles in a bath of water or by spraying the water onto the stainless steel slag particles.

By being brought in contact with the stainless steel slag particles, the pH of the neutralization water rises and also its heavy metals content. The neutralization water is therefore collected in one or more reservoirs and is re-used for the neutralization process. Although part of this water also evaporates, there is a surplus of water during rainy periods. Consequently, part of the neutralization water needs to be discharged. Also the water used in the wet jigging installation needs to be refreshed from time to time and needs thus also to be discharged.

A problem of discharging these waste waters is their high pH as well as the presence of traces of heavy metals. In particular Cr and Mo levels are often above the legal discharge levels. The stainless steel slag neutralization waters contain generally between 0.5 and 5 mg/l of trivalent chromium and between 0.5 and 10 mg/l of molybdenum. The waste water also contains a lot of anions such as sulphate and in particular chloride anions, chloride being generally present in an amount of between 200 and 2500 mg/l. The salt load of the waste water is thus quite high so that it is not allowed to add much more anions to the waste water. Notwithstanding the fact that by contact with the carbon dioxide contained in the air some carbonates are already formed, the pH of the waste water is still high and is in particular higher than 10, more particularly higher than 11 and often higher than 11.5 or even higher than 12.

In accordance with the present invention it has been found that this waste water can be treated effectively so as to reduce the chromium and molybdenum levels considerably. Both levels could be reduced to a value of less than 0.5 mg/l (i.e. less than 0.5 mg Cr/l and less than 0.5 mg Mo/l) in a simple way requiring only a limited amount of trivalent iron as co-precipitant and without requiring more than one pH lowering and raising step so that a too high increase of the salt load can be easily avoided notwithstanding the quite high initial pH of the waste water.

In the method according to the invention, chromium and molybdenum are made to precipitate by adding trivalent iron to the waste water and by allowing this trivalent iron to co-precipitate with the dissolved chromium and molybdenum by lowering the pH of the waste water. The thus produced precipitate is removed at least partially from the waste water before discharging the purified waste water.

The trivalent iron ions are added to the waste water in the form of at least one water soluble ferric salt. This salt may comprise ferric chloride ($FeCl_3$) but in view of the high chloride levels in the waste water, use is preferably made of water soluble ferric sulphate ($Fe_2(SO_4)_3$). The trivalent iron is added in a limited amount of between 1 and 5 mmoles Fe/l (i.e. in an amount of 56 to 280 mg Fe/l). The amount of trivalent iron added to the waste water by means of the water soluble ferric salt is preferably smaller than 4 mmoles/l and more preferably smaller than 3 mmoles/l. This amount is however preferably larger than 1.5 mmoles/l.

In order to allow this trivalent iron to precipitate with the trivalent chromium and the molybdenum, the pH of the waste water is lowered to a pH value of from 3.5 to 5.7. It has been found that within this pH range both the chromium level and the molybdenum level can be reduced by removing the produced precipitate to a level of less than 0.5 mg/l so that the waste water can be discharged. Even lower levels can be achieved when working within a narrower pH range. The lower pH limit is preferably higher than 3.6, and more preferably higher than 3.7, whilst the upper pH limit is preferably lower than 5.3, and more preferably lower than 4.8.

Lowering the pH from the initial high pH of the waste water to this lowered pH is achieved first of all by the addition of the water soluble ferric salt. This ferric salt dissociates in the waste water and the ferric ions react with hydroxides to form, depending on the pH of the waste water, compounds such as $Fe(OH)_4^-$, $Fe(OH)_3$, $Fe(OH)_2^+$ and $Fe(OH)^{2+}$, thereby lowering the pH of the waste water. As a result of the high initial pH of the waste water, and the limited amount of ferric salt which is added, at least one acid has additionally to be added. This acid may comprise sulphuric acid, phosphoric acid, hydrochloric acid, nitric acid or combinations thereof. Preference is however given to sulphuric acid since the waste water contains already a quite large amount of chloride and since the sulphate concentration can be reduced afterwards, if necessary, more easily by forming for example a calcium (and/or barium) sulphate precipitate.

An even more preferred acid is gaseous carbon dioxide which is a greenhouse gas. Due to the high pH of the waste water, this carbon dioxide is converted quickly in the waste water into carbonate ions. When contained in a gas, which comprises preferably at least 5 wt. %, more preferably at least 10 wt. % of carbon dioxide, the waste water can thus simply be aerated with this gas. The produced carbonates either remain in the waste water or they may also form precipitates, in particular with the calcium ions contained in relatively large amounts in the waste water.

In the method according to the invention the pH of the waste water is only lowered to achieve the lowered pH value at which the precipitate is allowed to be formed, i.e. the method does not comprise an intermediate step wherein the pH is first raised again, in particular with more than one pH unit, before being lowered to said lowered pH value. Moreover, the pH is also not lowered to more than one pH unit below the pH range at which the precipitate is allowed to be formed. In other words, the sum of the pH reduction obtained by the addition of the ferric salt (or salts) and the pH reduction obtained by the addition of the acid (or acids) differs by less than one pH unit from the difference between the initial pH of the waste water and the pH at which the precipitate is allowed to be formed. The pH of the waste water is preferably not lowered to a pH lower than 3.5.

The succession wherein the ferric salt or salts and the acid or acids are added was found to be of no importance. Consequently the ferric salt can either be added before the acid, after the acid and/or at the same time as the acid. Once they are added to the waste water, the waste water can be agitated (f.e. stirred) to stimulate the precipitation reactions. Subsequently, the formed precipitates can be allowed to settle. A flocculant and/or an anti-foam agent can be added to the waste water. Flocculants are known to the skilled person and can e.g. be an organic polymer such as Magnafloc®. Anti-foam agents are known to the skilled person and may comprise mineral oils such as Ciba® BURST® 5004, or may comprise a mixture of oxygenated hydrocarbons, amides, esters or fatty acids such as e.g. Ciba® BURST® 5005.

After having allowed the precipitate to be formed and preferably also after having allowed this precipitate to settle, it is removed at least partially from the waste water thereby lowering both the chromium and molybdenum content of the waste water, in particular both to a concentration of less than 0.5 mg/l (i.e. less than 0.5 mg Cr/l and less than 0.5 mg Mo/l). Before having removed the precipitate from the waste water, the pH thereof is preferably maintained between 3.5 and 6.5 and more preferably between 3.5 and 6.0 in order to prevent the precipitate, or at least some components thereof, from redissolving in the waste water.

Removing the precipitate from the waste water can be done by allowing it to settle and by removing the settled sludge, by filtering (for example by means of a sand filter) or preferably by a combination thereof.

Since the pH of the purified waste water is too low to be discharged, it is first raised to a pH within the range of pH 6.5 and 9. When the heavy metal levels have been sufficiently reduced, this can be done by adding a portion of the highly alkaline non-purified waste water (the non-purified waste water portion should be so small that the final chromium and molybdenum content of the mixture of purified and non-purified waste water remains less than 0.5 mg/l). However, preferably another alkaline substance is used to raise the pH of the purified waste water. This alkaline substance preferably comprises lime, in particular milk of lime (obtained by admixing quick lime (CaO) to water). The use of lime may have additionally the advantage that the calcium ions introduced in the waste water may cause additional precipitation reactions, such as the formation of calcium carbonates and especially calcium sulphates. These precipitates are preferably filtered out of the purified waste water.

In a preferred embodiment removing the precipitate from the waste water is done in two steps. In a first step a portion of the precipitate is removed from the waste water by allowing the precipitate to settle and by separating the settled sludge from the waste water before having added the alkaline substance to increase the pH of the waste water to a value between 6.5 and 9. In a second step, after having added the alkaline substance (so that additional precipitate may have been formed), i.e. after having increased the pH of the waste water to a value between 6.5 and 9, a further portion of said precipitate is removed from the waste water by filtering, preferably by means of a sand filter.

In addition to the trivalent chromium, the waste water may also contain a usually considerably smaller amount of hexavalent chromium. Since Cr(VI) is water soluble, it is preferably reduced to Cr(III) before co-precipitating this Cr(III) by means of the trivalent iron. A reducing agent is thus preferably added to the waste water to reduce Cr(VI) to Cr(III), after which the reduced chromium is allowed to co-precipitate with the trivalent iron. The final chromium concentration (i.e. the sum of Cr(III) and any Cr(VI)) should be smaller than 0.5 mg/l.

As reducing agent, use is preferably made of bivalent iron ions. These are oxidised to trivalent iron which can therefore assist in the co-precipitation of the iron with the heavy metals.

In the present specification, the term "co-precipitation" is to be understood in a broad sense. It refers indeed to the fact that the chromium and the molybdenum are precipitated simultaneously to the precipitation of the iron, whereby more chromium and molybdenum are precipitated, and embraces thus, but is not necessarily limited to, the chemical phenomenon whereby an element precipitates when it becomes embedded in the solid phase (precipitate) of another element, e.g. through adsorption on the surface of the precipitate, or physical encapsulation or chemical bonding inside the precipitate (occlusion or inclusion).

The purification method according to the present invention enables to achieve both a high chromium and a high molybdenum removal efficiency. The pH at which these heavy metals are allowed to co-precipitate with trivalent iron is preferably selected in such a manner within the pH range of 3.5 and 5.7, and the formed precipitate is removed to such an extent that at least 50%, preferably at least 70% and more preferably at least 90% of the molybdenum contained in the waste water is removed therefrom and/or that at least 50%, preferably at least 60% and more preferably at least 70% of the chromium contained in the waste water is removed therefrom. As explained hereabove, it has been found quite by surprise that with the highly alkaline waste water originating from the treatment, in particular the neutralization, of crushed stainless steel slags, an optimal removal of both chromium and molybdenum could be obtained by a co-precipitation with trivalent iron ions within a same pH range so that both could be removed in one and the same process step.

TEST RESULTS

**Waste water composition**

The stainless steel slag neutralization water which was used in the different tests contained 0.88 mg/l $Cr^{3+}$, 5.03 mg/l Mo and no measurable amount of $Cr^{6+}$ (below the detection limit of 0.05 mg/l). The initial pH of the waste water was 12.68 and the conductivity was 10.75 mS/cm.

Other parameters have not been measured. The following parameters were however measured for 12 other samples of stainless steel slag neutralization waste water, the minimum and maximum values (in mg/l) being indicated:

| pH | 11.5-13.18 | Ca | 22 - 180 |
|---|---|---|---|
| hydroxides | 33 - 1062 | Cr (tot) | 0.4 - 1.8 |
| carbonates | 6 - 329 | Cr (VI) | 0 - 0.29 |
| chlorides | 232 - 606 | K | 78 - 1340 |
| sulphates | 61 - 261 | Mo | 2.79 - 6.33 |
| fluorides | 9.5-17.1 | Na | 362 - 2120 |
| Al | 0.042 - 4.8 | B | 25 - 259 |

(continued)

| Ba | 0.08 - 0.3 | | |
|---|---|---|---|

**Waste water titration curve**

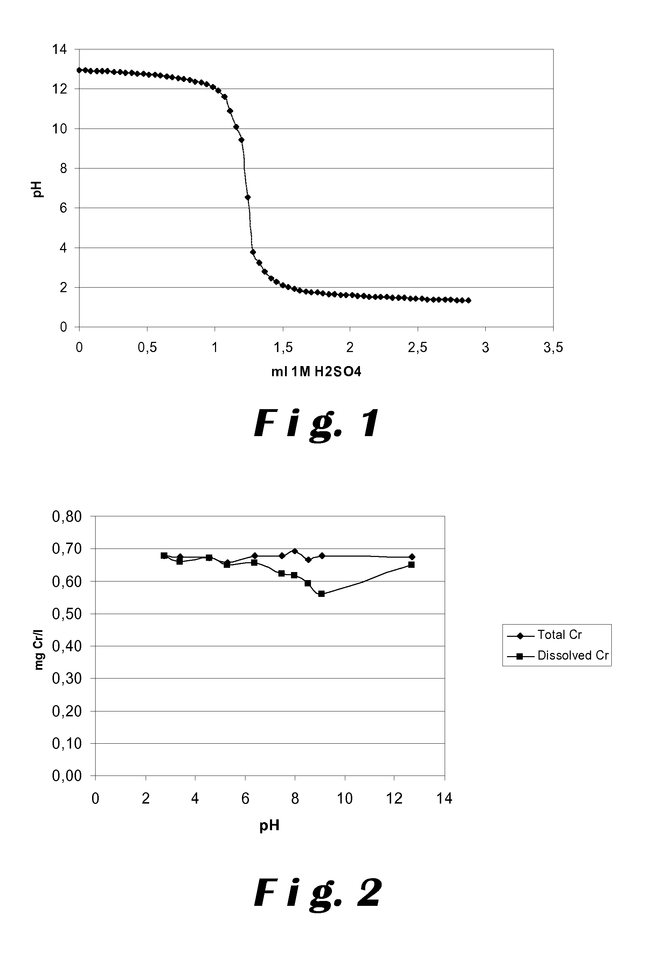

Figure 1 shows the titration of a 50 ml sample of the waste water with 1 M sulphuric acid. Sulphuric acid was preferred above hydrochloric acid so as not to increase the chloride discharge unnecessarily. The neutralization curve shows a sharp pH jump from 12 to 2 and an equivalence point around pH 7, which was reached after adding about 1.25 ml of 1 M sulphuric acid. From this curve it was deduced that the increase in sulphate ions caused by neutralization to pH 4 was somewhat more than 2000 mg/l.

**Precipitation of Cr and Mo hydroxides as a function of the pH (without trivalent iron)**

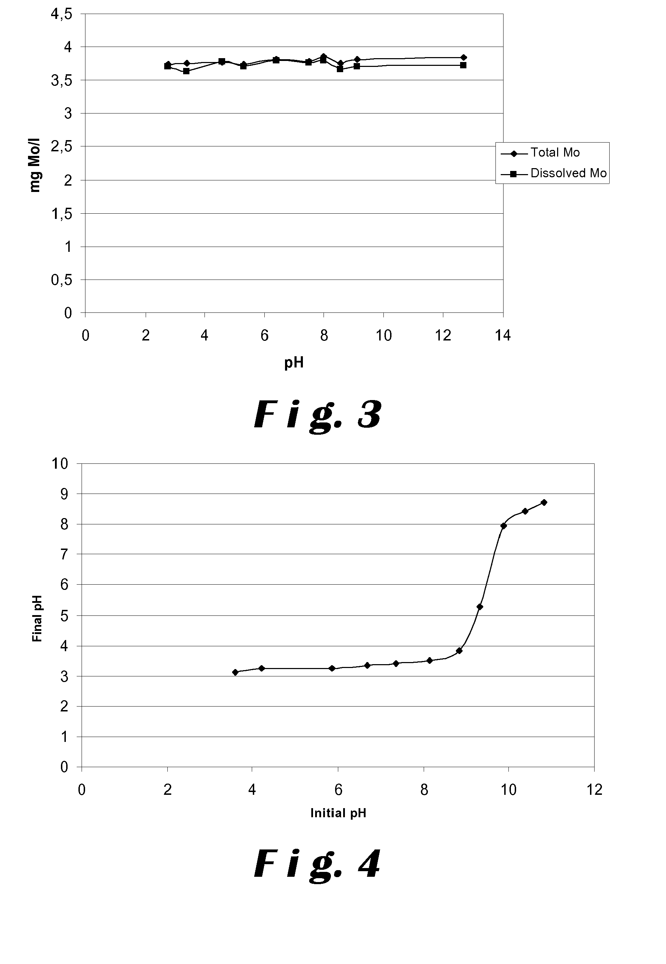

The sample of the waste water was brought by means of sulphuric acid to different pH's and stirred for one hour. Figures 2 and 3 show the total concentration (non-filtered) and the dissolved concentration (in the filtrate after filtration over a 0.45 μm filter) at different pH's of resp. Cr and Mo.

Figure 2 shows that the expected decrease of Cr at pH 8 (precipitation of hydroxides) is rather insignificant. Figure 3 shows that the concentration of Mo hardly varied as a function of pH.

**Co-precipitation of Cr and Mo with iron hydroxide as a function of pH followed by filtration**

After setting the pH with a 1 M sulphuric acid solution at different values between 3.77 and 11, each 100 ml sample was dosed with 100 mg/l Fe(III) as ferric sulphate solution (3.58 g/l). The sample was rapidly stirred for one minute and then slowly stirred for one hour. After precipitation for 0.5 to 1 hour, the final pH was measured and the solution was filtered through a 45 μm filter. Figure 4 shows the pH reduction obtained by the addition of the ferric sulphate as a function of the pH value to which the pH of the waste water was first lowered by means of the sulphuric acid.

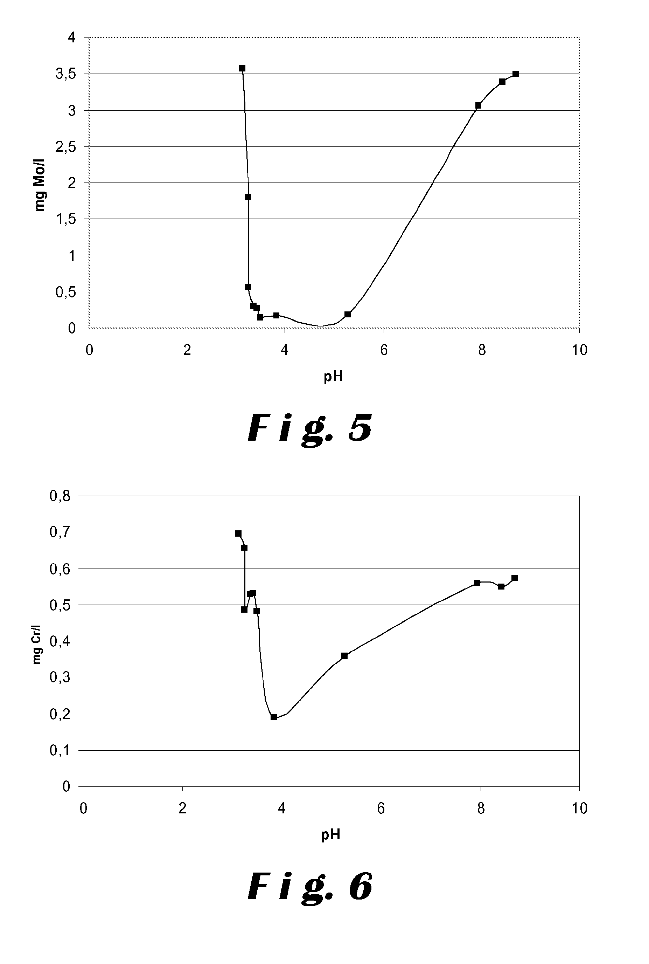

As can be seen in Figure 5, at a final pH within the range of 3.5 to 5.3, the concentration of Mo in the filtrate was around 0.1 -0.2 mg/l. For Cr the pH range wherein a reduction of the Cr concentration could be obtained to a concentration of less than 0.3 mg/l is somewhat narrower, namely within a range of from 3.6 to 4.8, with a minimum Cr concentration of about 0.2 mg/l which could be obtained at a final pH of about 4 (see Figure 6).

**Effect of first adding the ferric salt and then adjusting the pH by means of the acid**

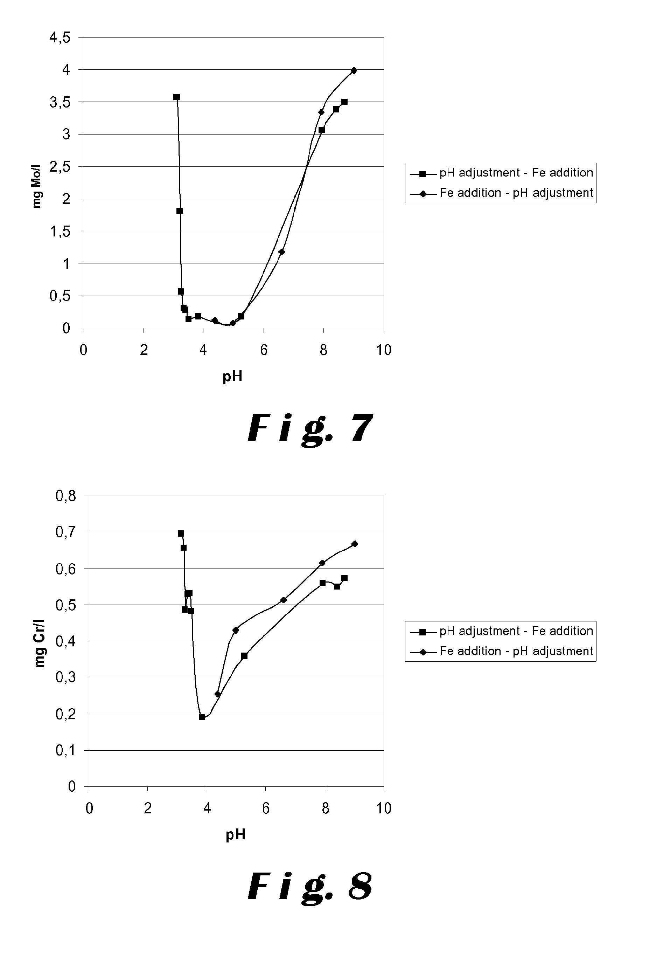

Figures 7 and 8 show the concentration of Mo and Cr, resp. as a function of pH levels obtained by adding first the ferric sulphate and subsequently the sulphuric acid to adjust the pH to the final pH value. It can be seen that the sequence of the addition of the ferric salt and the acid has substantially no effect on the final Mo and Cr concentrations.

**Co-precipitation of Cr and Mo with iron hydroxide as a function of the settling time**

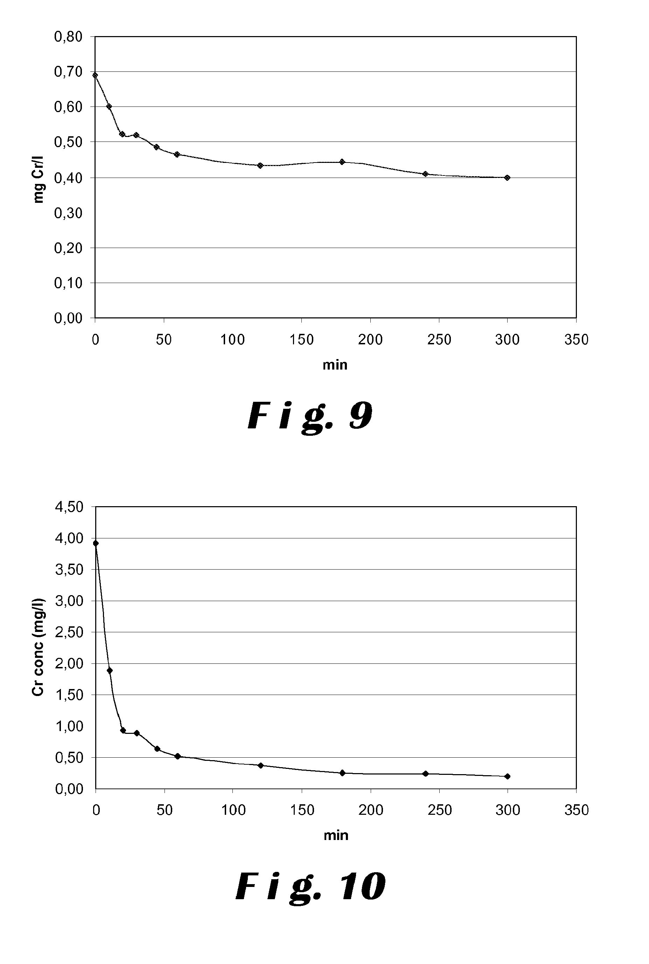

To a sample of 90 ml of the waste water (containing about 5 mg/l Mo and 0.88 mg/l Cr) 10 ml of a $Fe_2(SO_4)_3$ solution containing 1000 ppm Fe(III) was added and the pH was adjusted by means of 1 M sulphuric acid to 3.77. After 1 min of mixing and 30 min of slowly stirring the sample was allowed to settle slowly and samples of the supernatant were taken. As appears from Figures 9 and 10, the Cr and Mo concentrations in the supernatant after about 2 h settling amount each to about 0.4 mg/ml.

**Claims**

1. A method for purifying waste water from a stainless steel slag treatment process wherein stainless steel slag is brought into contact with water thereby producing said waste water which has an initial pH higher than 10, in particular higher than 11 and more particularly higher than 11.5, and which contains chromium, including between 0.5 and 5 mg/l of trivalent chromium (Cr(III)), and further between 0.5 and 10 mg/l of molybdenum, in which method a trivalent metal cation is added to the waste water and is allowed to co-precipitate with said chromium and molybdenum by lowering the pH of the waste water to form a precipitate which is at least partially removed from the waste water before discharging the purified waste water, **characterised in that** said trivalent metal cation is trivalent iron which is added in the form of at least one water soluble ferric salt to the waste water so as to provide between 1 and 5 mmoles/l of trivalent iron atoms in said waste water and **in that** the method comprises the successive steps of:

   - lowering the pH of the waste water from said initial pH to a lowered pH value within a range of from 3.5 to 5.7 by adding said ferric salt and at least one acid to said waste water, a first pH reduction being obtained by the addition of said at least one ferric salt and a second pH reduction by the addition of said at least one acid, the sum of the first and the second pH reductions being equal to or differing by less than one pH unit from the difference between said initial pH and said lowered pH value;
   - allowing said precipitate to be formed within said pH range;
   - removing said precipitate at least partially from the waste water thereby lowering the chromium content of the waste water to a concentration of less than 0.5 mg/l and the molybdenum content, when the initial molybdenum content was higher than or equal to 4 mg/l, to a concentration of less than 4 mg/l;
   - adding an alkaline substance to the waste water to increase the pH thereof to a value of between 6.5 and 9; and
   - discharging the purified waste water.

2. A method according to claim 1, **characterised in that** said lowered pH value is greater than 3.6 and preferably greater than 3.7.

3. A method according to claim 1 or 2, **characterised in that** said lowered pH value is smaller than 5.3 and preferably smaller than 4.8.

4. A method according to any one of the claims 1 to 3, **characterised in that** after having lowered the pH of the waste water to said lowered pH value, the pH of the waste water is maintained between 3.5 and 6.5, preferably between 3.5 and 6.0, until said precipitate is at least partially removed from the waste water.

5. A method according to any one of the claims 1 to 4, **characterised in that** less than 4 mmoles/l of trivalent iron atoms, preferably less than 3 mmoles/l of trivalent iron atoms are provided in the waste water by the addition of said water soluble ferric salt, preferably more than 1.5 mmoles/l of trivalent iron atoms are provided in the waste water by the addition of said water soluble ferric salt.

6. A method according to any one of the claims 1 to 5, **characterised in that** the waste water contains initially at least 0.5 mg/l of molybdenum, which molybdenum content is lowered by removing said precipitated at least partially from the waste water to a concentration of less than 0.5 mg/l.

7. A method according to any one of the claims 1 to 6, **characterised in that** said at least one acid comprises sulphuric acid or phosphoric acid, preferably sulphuric acid.

8. A method according to any one of the claims 1 to 7, **characterised in that** said at least one acid comprises gaseous carbon dioxide, said gaseous carbon dioxide being contained in a gas which comprises preferably at least 5 wt. %, more preferably at least 10 wt. %, of carbon dioxide.

9.  A method according to any one of the claims 1 to 8, **characterised in that** said water soluble ferric salt comprises ferric sulphate.

10. A method according to any one of the claims 1 to 11, **characterised in that** said waste water further contains hexavalent chromium and **in that** a reducing agent, in particular bivalent iron ions, are added to the waste water to reduce at least a portion of the hexavalent chromium to trivalent chromium, which reduced chromium is allowed to co-precipitate with said trivalent iron.

11. A method according to any one of the claims 1 to 12, **characterised in that** said alkaline substance comprises non-purified waste water, which is added in such an amount that the chromium content of the mixture of purified and non-purified waste water remains less than 0.5 mg/l and the molybdenum content of this mixture remains less than 4 mg/l.

12. A method according to any one of the claims 1 to 11, **characterised in that** said alkaline substance comprises lime, in particular milk of lime.

13. A method according to any one of the claims 1 to 12, **characterised in that** said precipitate is at least partially removed from the waste water by allowing the precipitate to settle and by separating the settled sludge from the waste water.

14. A method according to any one of the claims 1 to 13, **characterised in that** said precipitate is at least partially removed from the waste water by filtering, preferably by means of a sand filter.

15. A method according to any one of the claims 1 to 14, **characterised in that** a portion of said precipitate is removed from the waste water by allowing the precipitate to settle and by separating the settled sludge from the waste water before having increased the pH of the waste water to said value between 6.5 and 9 by the addition of said alkaline substance and, after having increased the pH of the waste water to said value between 6.5 and 9, a further portion of said precipitate is removed from the waste water by filtering, preferably by means of a sand filter.

16. A method according to any one of the claims 1 to 15, **characterised in that** the pH of the waste water is not lowered to a pH value of less than 3.5.

**F i g. 1**

**F i g. 2**

**F i g. 3**

**F i g. 4**

**F i g. 5**

**F i g. 6**

# Fig. 7

# Fig. 8

*Fig. 9*

*Fig. 10*

Europäisches
Patentamt

European
Patent Office

Office européen
des brevets

## EUROPEAN SEARCH REPORT

Application Number

EP 10 18 9163

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 7 390 416 B1 (EDE KENNETH F [US] ET AL) 24 June 2008 (2008-06-24) * the whole document * ----- | 1-16 | INV. C02F1/52 C02F1/66 |
| A | US 4 219 416 A (RAMADORAI GOPALAN [US] ET AL) 26 August 1980 (1980-08-26) * the whole document * ----- | 1 | ADD. C02F101/20 C02F101/22 C02F103/16 |
| A | US 2 982 608 A (JEAN CLEMENT) 2 May 1961 (1961-05-02) * the whole document * ----- | 1 | |

| | | | TECHNICAL FIELDS SEARCHED (IPC) |
|---|---|---|---|
| | | | C02F |

The present search report has been drawn up for all claims

| Place of search | Date of completion of the search | Examiner |
|---|---|---|
| Munich | 14 April 2011 | Serra, Renato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 18 9163

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2011

| Patent document cited in search report | | Publication date | Patent family member(s) | | Publication date |
|---|---|---|---|---|---|
| US 7390416 | B1 | 24-06-2008 | NONE | | |
| US 4219416 | A | 26-08-1980 | CA | 1116408 A1 | 19-01-1982 |
| US 2982608 | A | 02-05-1961 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1312415 A
- EP 1146022 A
- US 7390416 B
- JP 2000117265 A
- EP 0837043 A
- EP 2160367 A